# EUROPÄISCHE PATENTSCHRIFT

(11) **EP 0 585 644 B1**
(45) Veröffentlichungstag und Bekanntmachung des Hinweises auf die Patenterteilung: **14.05.1997**
(21) Anmeldenummer: 93112541.3
(22) Anmeldetag: 05.08.1993
(51) Int. Cl.: H02K 5/20

(54) **Oberflächengekühlte, geschlossene elektrische Maschine**
Totally enclosed liquid-cooled, fully enclosed electrical engine
Machine électrique entièrement fermée, refroidie en surface par liquide

(30) Priorität: 03.09.1992 DE 4229395
(43) Veröffentlichungstag der Anmeldung: 09.03.1994
(73) Patentinhaber: FHP Motors GmbH, 26133 Oldenburg (DE)
(72) Erfinder: Altmann, Manfred, Dipl.-Ing., D-26133 Oldenburg (DE); Oltmanns, Karl-Heinz, Dipl.-Ing., D-26123 Oldenburg (DE); Tillner, Siegfried, Dipl.-Ing., D-26125 Oldenburg (DE)
(74) Vertreter: Zangs, Rainer E., Dipl.-Ing.

(56) Entgegenhaltungen:
- EP-A- 0 208 219
- EP-A- 0 355 171
- WO-A-92/06529
- US-A- 2 627 582
- US-A- 5 084 642

## Beschreibung

Die Erfindung betrifft eine oberflächengekühlte, geschlossene elektrische Maschine der im Oberbegriff des Patentanspruchs 1 angegebenen Art.

Die Leistung eines Elektromotors wird bekanntlich wesentlich durch die Höchsttemperaturen bestimmt, welche seine verschiedenen Teile ohne Zerstörung oder dauernde Schädigung ertragen können. Um die Temperatur der inneren Teile einer elektrischen Maschine möglichst niedrig zu halten, ist gewöhnlich auf der Motorwelle ein Lüfter angeordnet, der einen Umlauf der Kühlluft durch das Motorgehäuse erzeugt. Bei geschlossenen elektrischen Maschinen, insbesondere Asynchronmotoren mit einem Blechpaket, steht dessen zylindrische Oberfläche mit einem Blechmantel in unmittelbarer , wärmeleitender Berührung. Hierfür ist es üblich, das Statorblechpaket dieser Motoren mit einer Umhüllung zu umgeben, welches mit Rippen zur Kühlung verbunden ist.

Die Forderung nach noch kompakteren Motoren und der dadurch bedingten höheren Betriebstemperaturen erfordern weitere Maßnahmen zur besseren Kühlung der Motoren. Daher wurde durch das deutsche Gebrauchsmuster 74 18 732 bereits vorgeschlagen, thermisch hoch ausgenutzte elektrische Maschinen, bei denen die Kühlluft nicht mehr ausreichend ist, mit einer Flüssigkeitskühlung zu versehen. Zu diesem Zweck sind auf der Oberfläche des Motorgehäuses vorhandene, längs verlaufene Lagerschildbefestigungsrippen mit Längsbohrungen versehen, durch welche Kühlflüssigkeit geleitet wird. Für leistungfähige Motoren, wie diese z. B. in Elektrofahrzeugen benötigt werden, reicht diese Kühlung nicht aus.

Durch die EP-A-0 208 219 ist eine oberflächengekühlte, geschlossene elektrische Maschine mit einem zylindrischen Gehäusemantel bekannt, der an beiden Stirnseiten mit je einem Wälzlager für die Rotorwelle eines Rotors aufnehmenden Lagerschildes verbunden ist und mit einem Stator, dessen Statorblechpaket mit der Innenwandung des Gehäusemantels in Wärme leitender Berührung steht, wobei der Gehäusemantel achssymmetrisch zum Stator mit Längskanälen für Kühlmittel versehen ist. Die Längskanäle sind hierbei in Umfangsrichtung gleichmäßig verteilt in der Wand des zylindrischen Gehäusemantels angeordnet und weisen in die Stirnflächen des Gehäusemantels mündende Öffnungen auf, welche über Umlenk- und Verbindungskanäle derart miteinander verbunden sind, daß das Kühlmittel den Gehäusemantel über den ganzen Umfang mäanderförmig durchläuft.

Weiterhin ist durch die US-A-5.084.642 ein Gehäuse mit einer Kanalanordnung für Kühlwasser für einen Elektromotor bekannt, wobei die Umlenk- und Verbindungskanäle in den die Offnungen in den Stirnseiten des Gehäusmantels verschließenden Lagerschilden angeordnet sind.

Schließlich offenbart die EP-A-0.355.171 noch ein Gehäuse mit Kanälen für eine elektrische Maschine, bei der die Kontaktflächen der ringförmigen Ansätze auf ihren Innenseiten je einen vorstehenden, umlaufenden Kragen aufweisen, welche bei der Montage der Lagerschilde in die beidseitigen Öffnungen des Gehäusemantels einschiebbar sind.

Der Erfindung liegt deshalb die Aufgabe zugrunde, eine elektrische Maschine der eingangs genannten Art zu schafen, die mittels einer besonders einfachen Bauart eine höchstmögliche Kühlwirkung ermöglicht. Diese Aufgabe wird durch die im Patentanspruch 1 gekennzeichnete Erfindung gelöst.

Die erfindungsgemäße geschlossene elektrische Maschine wird allen technischen Anforderungen im Hinblick auf niedrige Betriebstemperatur, kleine Abmaße bei großer Leistung und auf geringe Vibrationsneigung gerecht. Die elektrische Maschine arbeitet sehr geräuscharm, da die üblichen Gebläse nicht gebraucht werden, und die mit Flüssigkeit gefüllten Gehäuseteile dämpfen wirksam die während des Betriebes entstehenden Geräusche. Da die elektrische Maschine außerdem eine glatte Gehäuseoberfläche aufweist, sind Verletzungsgefahren bei der Montage des Motors weitgehend ausgeschlossen.

Weitere vorteilhafte Ausgestaltungen des Erfindungsgegenstandes sind den weiteren Unteransprüchen zu entnehmen. Die Erfindung wird anhand eines Ausführungsbeispiels im folgenden näher beschrieben. Es zeigt:
- Figur 1: einen Schnitt durch eine geschlossene trische Maschine,
- Figur 2: eine Draufsicht auf das Lagerschild B von der Innenseite,
- Figur 3: eine Draufsicht auf das Lagerschild A von der Innenseite,
- Figur 4: eine Draufsicht auf eine Stirnfläche des Gehäusemantels und
- Figur 5: eine schematische Darstellung des flüssigkeitsverlaufes.

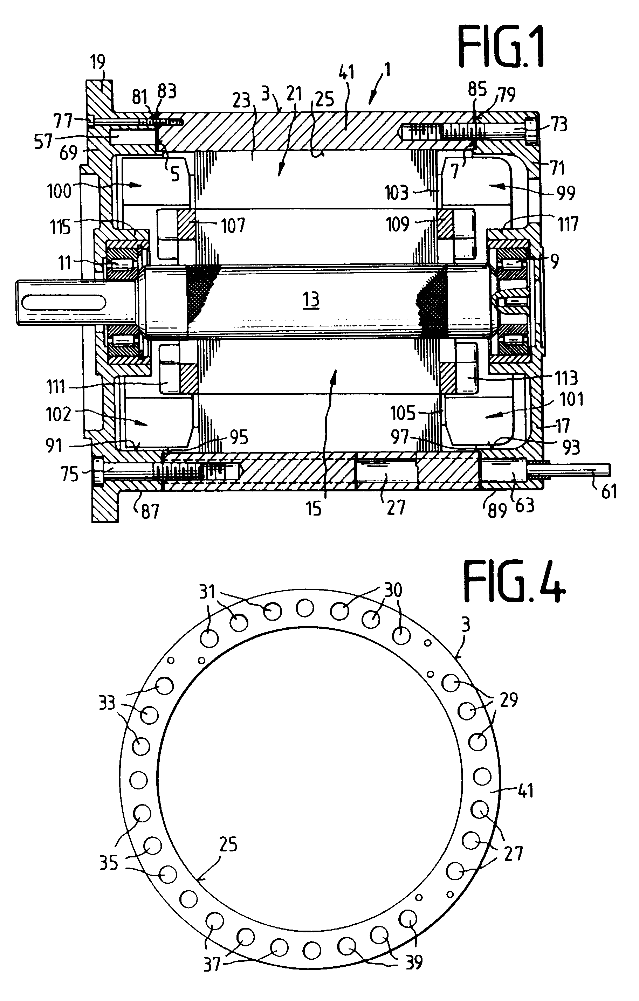

Die Figur 1 zeigt einen Schnitt durch eine oberflächengekühlte, geschlossene elektrische Maschine 1, insbesondere durch einen Asynchronmotor, mit einem zylindrischen Gehäusemantel 3, der an seinen beiden Stirnflächen 5, 7 mit je einem Wälzlager 9, 11 für die Rotorwelle 13 eines Rotors 15 aufnehmenden Lagerschild 17, 19 verbunden ist. Mit 21 ist ein Stator bezeichnet, dessen Statorblechpaket 23 mit der Innenwandung 25 des Gehäusemantels 3 in wärmeleitender Verbindung steht. Der aus Metall bestehende zylindrische Gehäusemantel 3 weist in Umfangsrichtung gleichmäßig verteilt und achsensymmetrisch zum Rotor 15 bzw. Stator 21 angeordnete Längskanäle 27, 29, 30, 31, 33, 35, 37 und 39 in der Wand 41 auf, deren in die Stirnflächen 5, 7 des Gehäusemantels 3 mündende Öffnungen über Umlenkkanäle 47, 49, 51, 53, 55, 57, 59 derart miteinander verbunden sind, daß das Kühlmittel den Gehäusemantel 3 von einem mit einem Einlaßstutzen 61 verbundenen Verbindungskanal 63 über die Längs- und Umlenkkanäle bis zu einem mit einem Auslaßstutzen 65 verbundenen Verbindungskanal 67 nacheinander über den ganzen Umfang mäanderförmig durchläuft. Hierdurch wird eine schnelle und wirkungsvolle Wärmeabführung aus dem Gehäusemantel 3 erzielt.

In vorteilhafter Ausgestaltung sind die Umlenkkanäle 47, 51, 55, 59 in dem A-seitigen Lagerschild 69 und die Umlenkkanäle 49, 53 und 57 und die Verbindungskanäle 63 und 67 in dem B-seitigen Lagerschild 71 angeordnet. Die Lagerschilde 69, 71 sind mittels mehrerer Schraubenverbindungen 73, 75, 77 mit dem Gehäusemantel 3 fest verbunden. Die Umlenkkanäle 47, 49, 51, 53, 55, 57 und 59 und die Verbindungskanäle 63 und 67 sind in den gegen die Stirnflächen 5, 7 des Gehäusemantels 3 preßbaren Kontaktflächen 79, 81 der Lagerschilde 69, 71 oberflächlich eingearbeitet. Um das mäanderförmige Durchlaufen des Kühlmittels durch den Gehäusemantel 3 zu erzielen, sind die Umlenkkanäle 47, 51, 55, 59 in der Kontaktfläche 81 des A-seitigen Lagerschildes 69 zu den Umlenkkanälen 49, 53, 57 und den Verbindungskanälen 63, 67 in der Kontaktfläche 79 des B-seitigen Lagerschildes 71 derart versetzt angeordnet, daß die Austrittsöffnungen eines Längskanales 27, 29, 30, 31, 33, 35, 37, 39 mit den Eintrittsöffnungen des in Umfangsrichtung folgenden nächsten Längskanals jeweils in flüssigkeitsleitender Verbindung stehen. Übrigens steht die Eintrittsöffnung des ersten Längskanals 27 mit einem in der Kontaktfläche 79 des B-seitigen Lagerschildes 71 angeordneten Verbindungskanal 63 zu dem Einlaufstutzen 61 und die Austrittsöffnung des in Umfangsrichtung fortlaufenden letzten Längskanales 39 mit einem Verbindungskanal 67 zu dem Auslaufstutzen 65 in Fließverbindung.

Im Rahmen der Erfindung ist es selbstverständlich auch möglich, den Einlaßstutzen 61 entweder mit dem Lagerschild 71 oder mit dem Lagerschild 69 und den Auslaßstutzen 65 mit dem anderen Lagerschild 69 bzw. 71 zu verbinden.

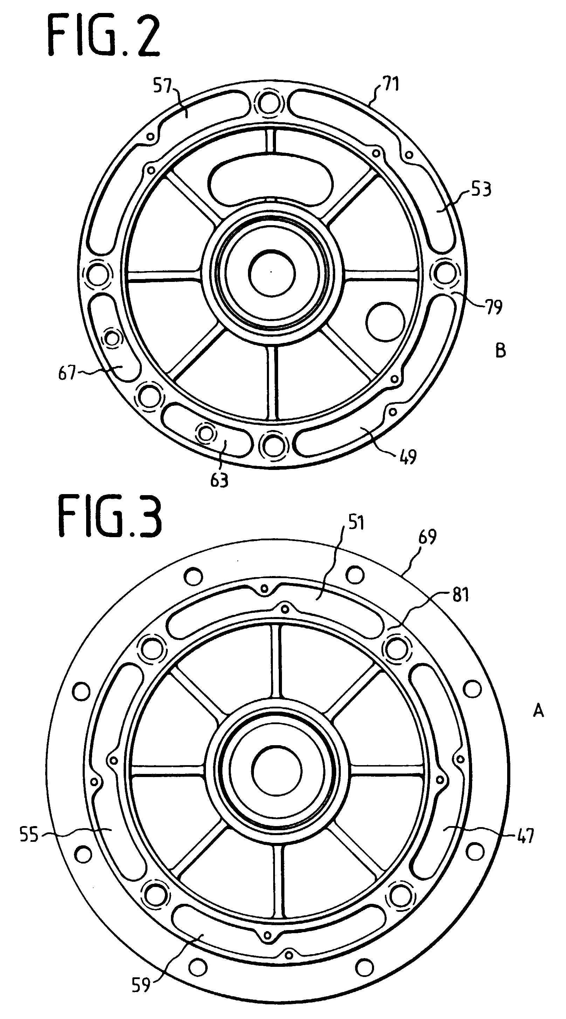

Gemäß Figur 2 sind der Verbindungskanal 63 zu dem Einlaßstutzen 61 und der Verbindungskanal 67 zu dem Auslaßstutzen 65 in dem selben Lagerschild 71 nebeneinander angeordnet.

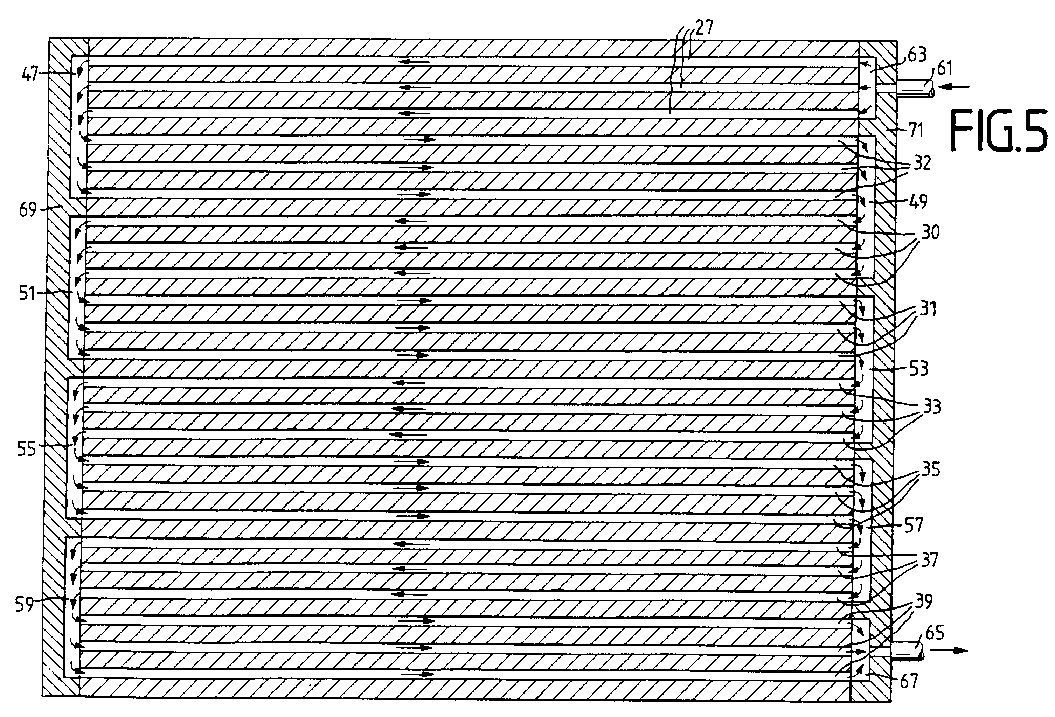

Gemäß den Figuren 4 und 5 wird jeder Längskanal 27, 29, 30, 31, 33, 35, 37, 39 durch mehrere nebeneinander angeordnete Längsbohrungen gebildet, deren Ein- bzw. Austrittsöffnungen in denselben Verbindungskanal 63, 67 bzw. Umlenkkanal 47, 49, 51, 53, 55, 57, 59 münden. Im Rahmen der Erfindung können die jeweils drei parallel beaufschlagten Längskanaäle 27, 29, 30, 31, 33, 35, 37, 39 durch einen gemeinsamen Kanal ersetzt werden. Die Umlenkkanäle 47, 49, 51, 53, 55, 57, 59 in den Lagerschilden 69, 71 haben jeweils eine nierenförmige Querschnittsform. Hierdurch ist es möglich, auch eine optimale Wärmeabführung in den Lagerschilden 69, 71 zu erzielen.

Um ein Eindringen der Kühlflüssigkeit in das Innere des Elektromotors und ein Austreten der Kühlflüssigkeit aus dem Elektromotor zu verhindern, ist je ein Dichtungsring 83, 85 zwischen den Kontaktflächen 79, 81 der beiden Lagerschilde 69,71 und den Stirnflächen 5, 7 des Gehäusemantels 3 angeordnet. Die Dichtungsringe 83, 85 weisen den Ein- bzw. Austrittsöffnungen der Längskanäle 27, 29, 30, 31, 33, 35, 37, 39 und den Verbindungskanälen 63, 67 bzw. den Umlenkkanälen 47, 49, 51, 53, 55, 57, 59 entsprechende Ausnehmungen auf.

Während des Betriebes des Elektromotors werden die Wärmeverluste vom Statorblechpaket 23 über die Innenwand 25 an die Kühlflüssigkeit in den Längskanälen 27, 29, 30, 31, 33, 35, 37, 39 des Gehäusemantels 3 abgeleitet. Werden keine weiteren Maßnahmen getroffen, so würde die in den Wicklungsköpfen 99, 101 der Wicklungen 103, 105 entstehende Wärme in das Statorblechpaket 23 übergehen, um von dort zum Kühlmittel geleitet zu werden. Unter diesen Umständen würde die Temperatur der Wicklungsköpfe 99, 101 stark ansteigen und sehr viel höher werden als die des Statorblechpaketes 23. Dieses wird dadurch verhindert, daß die Kurzschlußringe 107, 109 des Rotors 15 Lüfterflügel 111, 113 aufweisen, welche eine nach auswärts gerichtete, lebhaft zirkulierende Luftströmung um die Wicklungsköpfe 99, 100, 101, 102 erzeugen. Bei Drehung des Rotors 15 wird ein kontinuierlicher Luftstrom 21 nach außen gefördert, der gezwungen ist, durch und über die Wicklungen 103, 105 mit ihren Wicklungsköpfen 99, 100, 101, 102 zu strömen. Die Luft nimmt an den Wicklungen Wärme auf und kühlt sie an den Innenwänden der von Kühlflüssigkeit durchströmten Lagerschilde 69, 71 und des Gehäusemantels 3 ab. Die abgekühlte Luft kühlt danach auch die Lagernaben 115 und 117 in den Lagerschilden und damit die Lager 9, 11 ab. Durch die Drehung des Rotors 15 und damit der Lüfterflügel 111, 113 wird die Kühlluft dann wieder nach außen zu den Wicklungsköpfen 99, 100, 101, 102 gefördert, um erneut die Statorwicklungen 103, 105 zu kühlen. Durch die wirksame Zirkulation der Luft in den geschlossenen Teilen des Elektromotors werden auch dabei die Stirnflächen des Rotors 15 und dessen Kurzschlußringe 107, 109 gekühlt.

Die Umlenkkanäle 47, 49, 51, 53, 55, 57, 59 und die Verbindungskanäle 63, 67 sind in ringförmigen Ansätzen 87, 89 an den Lagerschilden 69, 71 angeordnet, an deren freien Enden sich die Kontaktflächen 79, 81 befinden. Hierdurch ist es möglich, daß die Umlenkkanäle und die Verbindungskanäle in den Lagerschilden die Wicklungsköpfe 99, 100, 101, 102 in dichtem Abstand umgeben. Durch diese Maßnahme kann die von den Wicklungsköpfen abgegebene Strahlungswärme zusätzlich über die Lagerschilde 69, 71 abgeführt werden. Wegen dieser zusätzlichen Kühlung kann die Temperatur der zirkulierenden Kühlluft so niedrig gehalten werden, daß auch der dadurch verursachte Druckanstieg sehr klein bleibt.

Zur Erleichterung der Montage des Elektromotors und zur besseren Abdichtung der Kontaktflächen 81, 79 mit den Stirnflächen 5, 7 des Gehäusemantels 3 weisen die Kontaktflächen 79, 81 der ringförmigen Ansätze 87, 89 auf ihren Innenseiten 91, 93 je einen vorstehenden, umlaufenden Kragen 95, 97 auf, welche in die beiderseitigen Öffnungen des Gehäusemantels 3 einschiebbar sind.

Die Oberflächen gekühlte, geschlossene elektrische Maschine gemäß der Erfindung ermöglicht eine gleichmäßige Motortemperatur, wodurch deren Leistung gesteigert und gleichzeitig die Lebensdauer verbessert werden. Weiterhin wird die Temperatur der im Motor eingeschlossenen Luft soweit gesenkt, daß ein störender Druckanstieg im Motor sicher verhindert wird.

## Patentansprüche

1. Oberflächengekühlte, geschlossene elektrische Maschine, insbesondere Asynchronmotor, mit einem zylindrischen Gehäusemantel (3), der an beiden Stirnseiten mit je einem Wälzlager (8,11) für die Rotorwelle (13) eines Rotors (15) aufnehmenden Lagerschild (17,19) verbunden ist, und mit einem Stator (21), dessen Statorblechpaket (23) mit der Innenwandung (25) des Gehäusemantels (3) in wärmeleitender Berührung steht, wobei der Gehäusemantel (3) achssymetrisch zum Stator (21) mit Längskanälen (27,29,30,31,33,35,37,39) für Kühlmittel versehen ist, welche in Umfangsrichtung gleichmäßig verteilt in der Wand (41) des aus Metall bestehenden zylindrischen Gehäusemantels (3) angeordnet sind, wobei die in die Stirnflächen (5,7) des Gehäusemantels (3) mündende Öffnungen der Längskanäle (27,29,30,31,33,35,37,39) über Umlenkkanäle (47,49,51,53,55,57,59) und zwei Verbindungskanäle (63,67) derart miteinander verbunden sind, daß das Kühlmittel den Gehäusemantel (3) von einem Einlaßstutzen (61) an dem einen Verbindungskanal (63) bis zu dem Auslaßstutzen (65) an dem anderen Verbindungskanal (67) über den ganzen Umfang mäanderformig durchläuft, **dadurch gekennzeichnet**, daß die Umlenkkanäle (47,49,51,53,55,57,59) und die Verbindungskanäle (63,65) in den gegen die Stirnflächen (5,7) des Gehäusemantels (3) preßbaren Kontaktflächen (79,81) der Lagerschilde (69,71) oberflächlich eingearbeitet sind und daß die Umlenkkanäle (47,51,55,59) in der Kontaktfläche (81) des A-seitigen Lagerschildes (69) zu den Umlenkkanälen (49,53,57) und den Verbindungskanälen (63,67) in der Kontaktfläche (79) des B-seitigen Lagerschildes (71) derart versetzt angeordnet sind, daß die Austrittsöffnungen eines Längskanales (27,29,30,31,33,35,37,39) mit den Eintrittsöffnungen des in Umfangsrichtung folgenden nächsten Längskanales jeweils in flüssigkeitsleitender Verbindung stehen.

2. Elektrische Maschine nach Anspruch 1, **dadurch gekennzeichnet**, daß der Verbindungskanal (63) zu dem Einlaßstutzen (61) und der Verbindungskanal (67) zu dem Auslaßstutzen (65) in demselben Lagerschild (71) nebeneinander angeordnet sind.

3. Elektrische Maschine nach Anspruch 1 oder 2, dadurch gekennzeichnet, daß jeder Längskanal (27,29,30,31,33,35,37,39) durch mehrere nebeneinander angeordnete Längsbohrungen gebildet wird, deren Ein- bzw. Austriffsöffnungen in demselben Verbindungskanal (63,67) bzw. Umlenkkanälen (47,49,51,53,55,57,59) münden.

4. Elektrische Maschine nach Anspruch 1, 2 oder 3, **dadurch gekennzeichnet,** daß die Umlenkkanäle (47,49,51,53,55,57,59) in den Lagerschilden (69,71) eine nierenförmige Querschnittsform aufweisen.

5. Elektrische Maschine nach Anspruch 1, 2, 3 oder 4, **dadurch gekennzeichnet**, daß je ein Dichtungsring (83,85) zwischen den Kontaktflächen (79,81) der Lagerschilde (69,71) und den Stirnflächen (5,7) des Gehäusemantels (3) angeordnet ist, der den Ein- bzw. Austrittsöffnungen der Längskanäle (27,29,30,31,33,35,37,39) und den Verbindungskanälen (63,67) und den Umlenkkanälen (47,49,51,53,55,57,59) entsprechende Ausnehmungen aufweist.

6. Elektrische Maschine nach einem der vorhergehenden Ansprüche, **dadurch gekennzeichnet,** daß die Umlenkkanäle (47,49,51,53,55,57,59) und die Verbindungskanäle (63,67) in ringförmigen Ansätzen /87,89) an den Lagerschilden (69,71) angeordnet sind, an deren freien Enden sich die Kontaktflächen (71,81) befinden.

7. Elektrische Maschine nach Anspruch 6, **dadurch gekennzeichnet,** daß die Kontaktflächen (79,81) der ringförmigen Ansätze (87,89) auf ihren Innenseiten (91,93) je einen vorstehenden, umlaufenden Kragen (95,97) aufweisen, welche bei der Montage der Lagerschilde (69,71) in den beidseitigen Öffnungen des Gehäusemantels (3) einschiebbar sind.

8. Elektrische Maschine nach Anspruch 6 oder 7, **dadurch gekennzeichnet,** daß die Wicklungsköpfe (99,100,101,102) der Statorwicklungen 103,105) in die ringförmigen Freiräume zwischen den ringformigen Ansätzen (87,89) und den vorstehenden Lagernaben (115,117) für die Wälzlager (9,11) hineinragen, derart, daß die Wicklungsköpfe (99,100,101,102) von strömenden Kühlflüssigkeiten in dem Gehäusemantel (3) und den Lagerschilden (69,71) umgeben sind.

## Claims

1. Surface-cooled, enclosed electrical machine, especially asynchronous motor, with a cylindrical housing shell (3) which is connected at both ends with a respective bearing plate (17, 19) receiving roller bearings (8, 11) for the rotor shaft (13) of a rotor (15), and with a stator (21), the stator lamination body (23) of which stands in thermally conductive contact with the inner wall (25) of the housing shell (3), wherein the housing shell (3) is provided axially symmetrically with respect to the stator (21) with longitudinal channels (27, 29, 30, 31, 33, 35, 37, 39) for coolant, which are arranged uniformly distributed in circumferential direction in the wall (41) of the cylindrical housing shell (3) consisting of metal, wherein the openings, which open into the end faces (5, 7) of the housing shell (3), of the longitudinal channels (27, 29, 30, 31, 33, 35, 37, 39) are connected together by way of deflecting channels (47, 49, 51, 53, 55, 57, 59) and two connecting channels (63, 67) in such a manner that the coolant flows through the housing shell (3) in meander shape over the entire circumference from an inlet stub pipe (61) at the one connecting channel (63) to the outlet stub pipe (65) at the other connecting channel (67), characterised thereby that the deflecting channels (47, 49, 51, 53, 55, 57, 59) and the connecting channels (63, 65) are machined shallowly into the contact surfaces (79, 81), which are pressable against the end faces (5, 7) of the housing shell (3), of the bearing plates (69, 71) and that the deflecting channels (47, 51, 55, 59) in the contact surface (81) of the bearing plate (69) at the A side are arranged offset relative to the deflecting channels (49, 53, 57) and the connecting channels (63, 67) in the contact surface (79) of the bearing plate (71) at the B side in such a manner that the exit openings of a longitudinal channel (27, 29, 30, 31, 33, 35, 37, 39) each time stand in liquid-conducting connection with the entry openings of the longitudinal channel following next in circumferential direction.

2. Electrical machine according to claim 1, characterised thereby that the connecting channel (63) is arranged adjacent to the inlet stub pipe (61), and the connecting channel (67) adjacent to the outlet stub pipe (65), in the same bearing plate (71).

3. Electrical machine according to claim 1 or 2, characterised thereby that each longitudinal channel (27, 29, 30, 31, 33, 35, 37, 39) is formed by several longitudinal bores, which are arranged adjacent to one another and the entry openings or exit openings of which open into the same connecting channel (63, 67) or deflecting channels (47, 49, 51, 53, 55, 57, 59).

4. Electrical machine according to claim 1, 2 or 3, characterised thereby that the deflecting channels (47, 49, 51, 53, 55, 57, 59) in the bearing plates (69, 71) have a kidney-shaped cross-sectional form.

5. Electrical machine according to one of claims 1, 2, 3 or 4, characterised thereby that a respective sealing ring (83, 85) is arranged between the contact surfaces (79, 81) of the bearing plates (67, 71) and the end faces (5, 7) of the housing shell (3), which has recesses corresponding to the entry or exit openings of the longitudinal channels (27, 29, 30, 31, 33, 35, 37, 39) and the connecting channels (63, 67) and the deflecting channels (47, 49, 51, 53, 55, 57, 59).

6. Electrical machine according to one of the preceding claims, characterised thereby that the deflecting channels (47, 49, 51, 53, 55, 57, 59) and the connecting channels (63, 67) are arranged in annular attachments (87, 89) at the bearing plates (69, 71) at the free ends of which are disposed the contact surfaces (71, 81).

7. Electrical machine according to claim 6, characterised thereby that the contact surfaces (79, 81) of the annular attachments (87, 89) have on their inner sides (91, 93) a respective projecting, encircling collar (95, 97), which is insertable into the openings of the housing shell (3) at both ends during the mounting of the bearing plates (69, 71).

8. Electrical machine according to claim 6 or 7, characterised thereby that the winding heads (99, 100, 101, 102) of the stator windings (103, 105) project into the annular free space between the annular projections (87, 89) and the projecting bearing hubs (115, 117) for the roller bearings (9, 11) in such a manner that the winding heads (99, 100, 101, 102) are surrounded by flowing cooling liquids in the housing shell (3) and the bearing plates (69, 71).

## Revendications

1. Machine électrique fermée, refroidie en surface, en particulier un moteur asynchrone, comprenant une enveloppe de carter cylindrique (3) qui est reliée, sur les deux parois frontales, à un flasque (17, 19) logeant des paliers à roulement (8, 11) prévus pour l'arbre de rotor (13) d'un rotor (15), et comprenant un stator (21) dont le paquet de tôle de stator (23) est en contact thermoconducteur avec la paroi interne (25) de l'enveloppe du carter (3), l'enveloppe de carter (3) étant munie, de manière axialement symétrique au stator (21), de canaux longitudinaux (27, 29, 30, 31, 33, 35, 37, 39) pour l'agent de refroidissement, qui sont disposés dans le sens périphérique de manière régulièrement répartie dans la paroi (41) de l'enveloppe de carter (3) cylindrique composée de métal, les ouvertures des canaux longitudinaux (27, 29, 30, 31, 33, 35, 37, 39), lesquelles débouchent dans les surfaces frontales (5, 7) de l'enveloppe de carter (3), étant reliées entre elles par des canaux de déviation (47, 49, 51, 53, 55, 57, 59) et deux canaux de jonction (63, 67), de manière que l'agent de refroidissement traverse l'enveloppe de carter (3) en formant des méandres sur toute la périphérie, depuis une tubulure d'admission (61) d'un canal de jonction (63) jusqu'à la tubulure d'évacuation (65) d'un autre canal de jonction (67), caractérisée en ce que les canaux de déviation (47, 49, 51, 53, 55, 57, 59) et les canaux de liaison (63, 65) sont ménagés dans les surfaces de contact (79, 81) des flasques (69, 71), pouvant être pressées contre les surfaces frontales (5, 7) de l'enveloppe de carter (3) et en ce que les canaux de déviation (47, 51, 55. 59) sont disposés dans la surface de contact (81) du flasque côté A (69) en décalé par rapport aux canaux de déviation (49, 53, 57) et aux canaux de jonction (63, 67) dans la surface de contact (79) du flasque côté B (71) de telle sorte que les ouvertures de sortie d'un canal longitudinal (27, 29, 30, 31, 33, 35, 37, 39) sont respectivement en communication d'écoulement avec les ouvertures d'entrée du prochain canal longitudinal suivant dans le sens périphérique.

2. Machine électrique selon la revendication 1, caractérisée en ce que le canal de liaison (63) à la tubulure d'admission (61) et le canal de liaison (67) à la tubulure d'évacuation (65) sont disposés l'un à côté de l'autre dans le même flasque (71).

3. Machine électrique selon la revendication 1 ou 2, caractérisée en ce que chaque canal longitudinal (27, 29, 30, 31, 33, 35, 37, 39) est constitué par plusieurs perçages oblongs disposés les uns à côté des autres dont les ouvertures d'entrée respectivement de sortie débouchent dans le même canal de jonction (63, 67) respectivement dans les mêmes canaux de déviation (47, 49, 51, 53, 55, 57, 59).

4. Machine électrique selon la revendication 1, 2 ou 3, caractérisée en ce que les canaux de déviation (47, 49, 51, 53, 55, 57, 59) présentent, dans les flasques (69, 71), une forme de section transversale réniforme.

5. Machine électrique selon la revendication 1, 2, 3 ou 4, caractérisée en ce qu'une bague d'étanchéité (83, 85) est disposée entre les surfaces d'étanchéité (79, 81) des flasques (69, 71) et les surfaces frontales (5, 7) de l'enveloppe de carter (3) qui présentent des cavités correspondant aux ouvertures d'entrée respectivement de sortie des canaux longitudinaux (27, 29, 30, 31, 33, 35, 37, 39), aux canaux de jonction (63, 67) et aux canaux de déviation (47, 49, 51, 53, 55, 57, 59).

6. Machine électrique selon l'une des revendications précédentes, caractérisée en ce que les canaux de déviation (47, 49, 51, 53, 55, 57, 59) et les canaux de jonction (63, 67) sont disposés dans des talons annulaires (87, 89) sur les flasques (69, 71) aux extrémités desquels se trouvent les surfaces de contact (71, 81).

7. Machine électrique selon la revendication 6, caractérisée en ce que les surfaces de contact (79, 81) des talons annulaires (87, 89) présentent chacune, sur leurs faces internes (91, 93), des collerettes saillantes circulaires (95, 97) qui sont insérables dans les ouvertures des deux côtés de l'enveloppe de carter (3), pendant le montage des flasques (69, 71).

8. Machine électrique selon la revendication 6 ou 7, caractérisée en ce que les têtes de bobine (99, 100, 101, 102) des bobines de stator (103, 105) s'engagent dans les espaces libres entre les talons annulaires (87, 89) et les moyeux saillants (115, 117) des paliers à roulement (9, 11) de sorte que les tètes de bobines (99, 100, 101, 102) sont entourées de liquide de refroidissement s'écoulant dans l'enveloppe de carter (3) et les flasques (69, 71).
